**Europäisches Patentamt**

**European Patent Office**

**Office européen des brevets**

(19)

(11) Publication number: **0 041 779**
**A1**

(12)

# EUROPEAN PATENT APPLICATION

(21) Application number: **81302144.1**

(22) Date of filing: **14.05.81**

(51) Int. Cl.³: **D 06 P 5/20**
**D 06 P 3/54, D 06 B 19/00**
**C 09 B 67/40**

(30) Priority: **11.06.80 GB 8019154**

(43) Date of publication of application:
**16.12.81 Bulletin 81/50**

(84) Designated Contracting States:
**BE CH DE FR GB IT LI**

(71) Applicant: **IMPERIAL CHEMICAL INDUSTRIES LIMITED**
**Imperial Chemical House Millbank**
**London SW1P 3JF(GB)**

(72) Inventor: **Leaver, Alan Thomas**
**22 Brookfield Drive**
**Worsley Manchester M28 4JY(GB)**

(72) Inventor: **Lewis, John Frederick**
**The Forge, 417 Holcombe Road**
**Greenmount, Bury, Lancs(GB)**

(74) Representative: **Clark, Peter Frederick et al,**
**Imperial Chemical Industries Limited Legal Department,**
**Patents Thames House North Millbank**
**London SW1P 4QG(GB)**

(54) **Colouration process.**

(57) A process for the colouration of a substrate of aromatic polyester fibre, alone or blended with other fibres, and textile materials fabricated therefrom, which comprises applying to the substrate a disperse dyestuff and at least one organic liquid having a high dielectric loss factor, a minimum boiling point of at least 120°C and a maximum boiling point below the melting point of aromatic polyester or other fibres, the substrate then being exposed to a radiofrequency or microwave field, thereby to heat the organic liquid and to fix the dyestuff on the substrate.

EP 0 041 779 A1

COMPLETE DOCUMENT

This invention relates to a colouration process in which dyestuffs are fixed on an aromatic polyester substrate through the action of certain electromagnetic radiation.

Aromatic polyester is conventionally coloured by dyeing, padding or printing processes using disperse dyestuffs.   In the case of dyeing, the polyester in the form of yarn or tow, or of woven or knitted textile material, is immersed in an aqueous dyebath containing one or more disperse dyestuffs and fixation is achieved either at a temperature of about 100°C in the presence of a carrier, or in the absence of a carrier at a temperature in the region of 130°C by conducting the dyeing process at superatmospheric pressure.   In either case the process may take up to one hour or even longer.   In the case of padding or printing methods, a padding liquor or printing paste containing the disperse dyestuff is applied to an aromatic polyester textile material, which is then preferably dried and subjected to a heat treatment to fix the dyestuff on the material.   This heat treatment can, for example, comprise treatment with superheated steam or in steam either at atmospheric pressure or under superatmospheric pressure or a baking treatment in hot air at temperatures in the region of 150° to 230°C, or by passing the material over a heated surface, for example, over a calendar at 150° to 230°C.   At the conclusion of the dyeing, padding or printing operation the coloured polyester is usually given a "reduction clear" treatment in warm aqueous alkaline sodium hydrosulphite solution, followed by one or more further rinses in warm aqueous detergent solution, warm water and finally cold water in order to ensure complete removal of any unfixed dyestuff and any additives which were present in the dyebath, padding liquor or printing paste.   After the rinsing sequence the coloured material then has to be dried.

All of these conventional colouration processes are energy intensive because of the considerable heat input at the fixation, rinsing and drying stages, and therefore costly.   They are also time-consuming and use large quantities of water.

A colouration process for aromatic polyester fibre or textile material has now been developed in which substantial reductions in energy and water usage, and in time of operation, may be achieved compared with the conventional processes.

According to the present invention there is provided a process for the colouration of a substrate of aromatic polyester fibre, alone or blended with other fibres, and textile materials fabricated therefrom, which comprises applying to the substrate a disperse dyestuff and at least one organic liquid having a high dielectric loss factor, a minimum boiling point of at least 120°C and a maximum boiling point below the melting point of aromatic polyester or other fibres, the substrate then being exposed to a radiofrequency or microwave field, thereby to heat the organic liquid and to fix the dyestuff on the substrate.

The radiofrequency band for heating purposes covers the 2MHz to 100MHz range while microwave frequencies are in the range 400 MHz to 3000 MHz.   It is not possible to use all the frequencies within these bands for industrial purposes as this would cause interference with communications systems, and by international agreement it has been decided that only specific frequencies can be used.   In the radiofrequency range these are 13.56MHz, 27.12MHz and 40.68MHz, and in the microwave range they are 896MHz and 2450MHz.

The substrate may be in the form of yarn, loose stock or tow, or of woven or knitted textile material. In the latter case the process is particularly well adapted to continuous operation.

The disperse dyestuff which is used in the above process may be any of those disperse dyestuffs which are known from the art or used in practice for the colouration of aromatic polyester, for example those disperse dyestuffs which are disclosed in the 3rd Edition of the Colour Index, published 1971 by the Society of Dyers and Colourists. Mixtures of such dyestuffs may be used.

The term "dielectric loss factor" in the above definition is defined as the product of the dielectric constant of the material under consideration and tan δ, where δ is the angle by which the current in the material being irradiated lags behind the current in a perfect capacitor. The value of the loss factor varies with frequency and temperature, but in the present instance it is required that it maintains a high value over the temperature range and irradiating frequency of the process.

The organic liquids having a high dielectric loss factor for use in the process must have a boiling point of at least 120°C and below the melting point of aromatic polyester. This upper boiling point limit is effectively approximately 250°C, and suitable organic liquids are, for example, ethylene glycol monomethyl ether, ethylene glycol monoethyl ether, ethylene glycol monopropyl ether, ethylene glycol monoisopropyl ether, ethylene glycol monobutyl ether, ethylene glycol monoisobutyl ether, ethylene glycol monohexyl ether, ethylene glycol monophenyl ether, ethylene glycol monoacetate, ethylene glycol diacetate, ethylene glycol dibutyrate, ethylene glycol diethyl ether, diethylene glycol, diethylene glycol monomethyl ether, diethylene glycol monoethyl ether, diethylene glycol monoethyl ether acetate, diethylene glycol monobutyl ether, diethylene glycol monobutyl ether acetate, diethylene glycol dimethyl ether, diethylene glycol diethyl ether, diethylene glycol dibutyl ether, diethylene glycol diacetate and diethylene glycol diisobutyrate.

The preferred organic liquids are ethylene glycol, propylene glycol (propane-1,2-diol) and dipropylene glycol because of their ready availability, cheapness and compatibility as components of dyestuff formulations.

Mixtures of organic liquids as hereinbefore defined may be used.

The organic liquid can be applied alone or as part of a dyestuff formulation.

The disperse dyestuff and the organic liquid will generally be applied to the substrate in the form of a composition containing, in addition to the above-mentioned ingredients, a dispersing agent for the dyestuff, in such proportions as to cause the dyestuff to be efficiently heated under the influence of radiofrequency or microwave radiation to a temperature below the melting point of the aromatic polyester substrate to which the composition is applied. The organic liquid can be used in admixture with water, and will be used in this way in most cases since disperse liquid dyestuffs are mostly prepared in the form of aqueous dispersions. The organic liquid when part of the total dyestuff formulation then usually acts as a humectant, preventing drying out of the composition. The dispersing agent is chosen so that it is not an efficient absorber of radiation at temperatures above the melting point of the aromatic polyester substrate, or so that the quantity of dispersing agent present on the substrate is so small that its thermal capacity is too low to contribute significantly to the temperature of the substrate with which it is in contact. These dyestuff compositions constitute a further feature of the invention.

The composition comprising the disperse dyestuff and the organic liquid may be applied to the aromatic polyester substrate by conventional dyeing or printing techniques, for example, by padding, or by roller or screen printing methods in the case of textile materials, and also by low add-on techniques such as from a foam applicator or

Dd.31372 0041779

by a fine droplet spray on to the substrate, or by a lick-roll application. These latter methods are particularly useful for application to textile materials having an easily distortable construction.

After impregnation, partial drying may be necessary by conventional means (for example, infra-red pre-drying) to remove excess water from the substrate, but complete drying is avoided so that a substantial proportion of the organic liquid remains on the substrate after pre-drying. When the dyestuff and the organic liquid are applied by low liquor add-on techniques to the substrate then little or no pre-drying is required.

The substrate, to which the disperse dyestuff composition has been applied, then passes through a radiofrequency or microwave field in which the presence of the organic liquid with its high loss factor causes efficient heating of the substrate to a temperature at which rapid diffusion of the dyestuff into the substrate occurs. The maximum temperature to which the substrate is heated is largely controlled by the rate of evaporation of the organic liquid (i.e. its boiling point) and by the fact that the aromatic polyester substrate is an inefficient absorber of the incident radiation.

High levels of dyestuff fixation can be achieved with this process, thus enabling the washing-off operation or other subsequent scouring treatments to be omitted in some instances without significantly affecting the fastness properties of the coloured substrate. The process is particularly suitable for polyester because of the low absorption of radiofrequency or microwave radiation by the substrate, but the process is also applicable to blends of aromatic polyester with other fibres, for example, polyester/wool, polyester/cellulose and polyester/cellulose triacetate.

The preferred form of the polyester substrate used in the present process are piece, yarn and tow, but the process is not limited to these forms.

The invention is illustrated by the following Examples in which percentages are by weight.

Example 1

Texturised aromatic polyester fabric was padded at 110% liquor pick-up through a dyebath containing 120 g/l of a disperse dyestuff formulation comprising 12.5% dyestuff (CI Disperse Blue 79.1), 65% dipropylene glycol, 6.25% of an anionic dispersing agent and water to 100%. The padded fabric was subjected to radiofrequency radiation at 27.12MHz for a total dwell time of 5 minutes and an output current of 350 milliamperes. The fabric was coloured in a blue shade having good fastness properties.

Example 2

Texturised aromatic polyester fabric was padded at 110% liquor pick-up through a dyebath containing 10 g/l of a disperse dyestuff formulation comprising 18% dyestuff (CI Disperse Violet 33), 7.2% of an anionic dispersing agent, 25% propylene glycol and water to 100%. A further 200 g/l of propylene glycol may be included in the padding liquor to improve fixation. The padded fabric was dried for approximately 3 minutes at 110°C to give about 20% moisture retention, and subsequently subjected to radiofrequency radiation at 27.12MHz for a total dwell time of 2 minutes and an output current of 350 milliamperes. The fabric was coloured in a violet shade having good fastness properties.

Example 3

The procedure described in Example 1 is repeated except that the dipropylene glycol is replaced by ethylene glycol.   A similar result is obtained.

**0041779**

Dd.31372/ef

## CLAIMS

1.      A process for the colouration of a substrate of aromatic polyester fibre, alone or blended with other fibres, and textile materials fabricated therefrom, which comprises applying to the substrate a disperse dyestuff and at least one organic liquid having a high dielectric loss factor, a minimum boiling point of at least 120°C and a maximum boiling point below the melting point of aromatic polyester or other fibres, the substrate then being exposed to a radiofrequency or microwave field, thereby to heat the organic liquid and to fix the dyestuff on the substrate.

2.      A process as claimed in claim 1 wherein the organic liquid is ethylene glycol, propylene glycol or dipropylene glycol.

3.      A process as claimed in claim 1 or claim 2 wherein the organic liquid is applied as part of a dyestuff formulation.

4.      A process as claimed in claim 3 wherein the dyestuff formulation also contains water, the substrate being at least partially dried after application of the formulation to remove excess water from the substrate.

5.      A process as claimed in claim 1 substantially as hereinbefore described in any one of the foregoing Examples.

6.      A dyestuff formulation for use in the process claimed in claim 1 which comprises a disperse dyestuff, an organic liquid as defined in claim 1, water and a dispersing agent.

PFC/BH
12.5.81.

## DOCUMENTS CONSIDERED TO BE RELEVANT

| Category | Citation of document with indication, where appropriate, of relevant passages | Relevant to claim |
|---|---|---|
| X | GB - A - 1 363 277 (HOECHST)<br><br> * Claims 1-14; page 4, example 1; page 1, line 17 - page 3, line 59 *<br><br>-- | 1-3,5, 6 |
| X | GB - A - 1 124 787 (WOLSEY)<br><br> * Claims 1, 14-18; page 1, lines 50-62; page 2, lines 98-102; page 3, Table *<br><br>-- | 1-3,5, 6 |
| X | CHEMICAL ABSTRACTS, vol. 84, no. 4, 26th January 1976, page 102, abstract 19058f<br>Columbus, Ohio, US<br><br>& JP - A - 75 77 673 (TOYOBO) (25-06-1975)<br><br> * Abstract *<br><br>-- | 1-3,5, 6 |
|  | GB - A - 1 004 921 (SANDOZ)<br><br> * Claims 1,3,9,16; example 10; page 2, lines 6-22, 42-50 *<br><br>-- | 1-6 |
|  | CH - A - 383 919 (SANDOZ)<br><br> * Page 3, claims 4,5; page 1, lines 51-64; page 2, line 3 and lines 101-106 *<br><br>-- | 1-6 |
|  | CHEMICAL ABSTRACTS, vol. 83, no.12 22nd September 1975, page 80, abstract 99084d<br>Columbus, Ohio, US<br><br>      ./. | 1,5 |

**CLASSIFICATION OF THE APPLICATION (Int Cl.³)**

D 06 P  5/20
     3/54
D 06 B 19/00
C 09 B 67/40

**TECHNICAL FIELDS SEARCHED (Int. Cl.³)**

D 06 P  5/20
     3/54
D 06 P  1/90
D 06 B 19/00
C 09 B 67/40

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-09-1981 | DEKEIREL |

EPO Form 1503.1  06.78

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | & JP.- A - 75 48 073 (TOYOBO) (28-04-1975)  * Abstract *  -- | | |
| | CHEMICAL ABSTRACTS, vol. 84, no. 16 19th April 1976, page 73, abstract 107014u Columbus, Ohio, US  & JP - A - 75 157 678 (YASUDA SAN-GYO; SANYO ELECTRIC) (19-12-1975)  * Abstract *  -- | 1,4,5 | |
| A | DE - A - 1 915 610 (SINGER-COBBLE)  * The whole document *  & GB - A - 1 257 807 *  -- | 1 | |
| P | CHEMICAL ABSTRACTS, vol. 94, no. 6, 9th February 1981, pages 74 and 75, abstract 32 107x Columbus, Ohio, US  & JP - A - 80 132 761 (AGENCY OF INDUSTRIAL SCIENCES AND TECHNO-LOGY) (15-10-1980)  * Abstract *  ---- | | |

TECHNICAL FIELDS SEARCHED (Int. Cl.³)

EPO Form 1503.2  06.78